# EUROPEAN PATENT APPLICATION

(11) **EP 4 657 387 A1**
(43) Date of publication of application: **03.12.2025**
(21) Application number: 25178907.9
(22) Date of filing: 27.05.2025
(51) Int. Cl.: G06V 10/774, G06V 10/82, G06V 20/60

(54) **COMPUTER-IMPLEMENTED METHOD FOR TRAINING OF AN IMAGE CONTENT RECOGNITION ALGORITHM**

(30) Priority: 27.05.2024 EP 24178159
(71) Applicant: Sick IVP AB, 583 30 Linköping (SE)
(72) Inventor: HEDBERG, Erik, 582 17 Linköping (SE)
(74) Representative: Bergenstråhle & Partners AB

(57) **Abstract**

The present invention relates to a computer-implemented method for training of an image object recognition algorithm of a machine vision system (100), said machine vision system (100) being operative to recognize at least one object (203) in images (202) captured by the machine vision system (100). The present invention further relates to a computer program product (1001) comprising computer program code, the computer program code being adapted, if executed by a processor (1002), to perform the various methods according to the present disclosure and a machine vision system (100) being operative to recognize at least one object (203) in captured images, configured to execute the computer program product (1000).

## Description

### TECHNICAL FIELD

The present disclosure relates in general to the field of training of algorithms of machine vision systems and specifically to a computer-implemented method for training of an image content recognition algorithm of a machine vision system, a computer program product comprising computer program code, the computer program code being adapted, if executed by a processor, to perform the method, and a system for recognizing content in captured images.

### BACKGROUND

Training an image content recognition algorithm, i.e. a machine learning (ML) algorithm which can recognize various objects within an image, is conventionally done by providing one or more sets of images comprising, that is, that are imaging, various objects including such to be recognized, with the images all being annotated with the same type of information about the objects to be recognized. In other words, the sets of images are training data used to update, or in other words, to train, the image content recognition algorithm to successively become more accurate in recognizing objects within images. Typically, the training and recognition is about recognizing a specific object and for example find out if this object is present in the image and/or where it is located and/or how many instances of it that are present.

Should the algorithm be implemented in a system for recognizing content in an image captured in an industrial setting, e.g. in a non-limiting example of recognizing a certain type of object on a conveyor belt, the image content recognition algorithm must be accurate to ensure any benefit. It follows that the number of annotated images needs to be sufficient to be able to train the image content recognition algorithm to a level where it can perform its recognition task accurate enough for use in practice. Annotating images to be provided as training data, a task often fully or partly performed manually, requires considerable effort.

Thus, there is a need, or at least desirable, to be able to more efficiently , for example with reduced annotation effort and/or amount of annotation, reach a sufficiently trained image content recognition algorithm.

### SUMMARY

An object of the present disclosure is to provide one or more improvements or alternatives to the prior art, such as a more efficient method of training an image content recognition algorithm and to provide a computer program product and a system for recognizing content in captured images configured to perform the method.

A main idea of the present invention is to combine annotations of different types, instead of using and for example requiring the user to provide the machine vision system with images that are all annotated in the same way.

This objective is achieved by means of the subject matter of the independent claims of the present disclosure, wherein further aspects of the present disclosure are incorporated in the dependent claims.

According to a first aspect of the present disclosure and embodiments herein, it is provided a computer-implemented method for training of an image object recognition algorithm of a machine vision system, said machine vision system being operative to recognize at least one object in images captured by the machine vision system, said method comprising: obtaining a plurality of images wherein at least one image comprises the at least one object, providing a first annotation for a first set of the plurality of images, said first annotation providing information about the at least one object, providing a second annotation for at least a second set of the plurality of images, said second annotation providing information of a different type than the first annotation about the at least one object, training said image content recognition algorithm using said first and second annotations.
By combining said first and second annotations comprising different types of information about the at least one object, a more efficient method for training of the image object recognition algorithm is achieved.

Said first annotation may provide more detailed information about the at least one object in the at least one image than said second annotation.

The second annotation may complement, that is, be complimentary to, the first annotation, to further increase the efficiency of training the image object recognition algorithm. Also, the less detailed information makes it possible to accomplish the second annotation with less effort than the first annotation. For example, a large number of images with less detailed complimentary second annotations may be provided with less effort than a fewer number of images with the first annotation, and the result may still be a sufficiently and possibly even better trained algorithm than with only the first annotation.

Said image content recognition may use said first annotation before said second annotation.

For example, the first annotation may be used to train the image object recognition algorithm to achieve a baseline level and the second annotation may be used to effectively train the algorithm to an operational level.

Said first set of images may be the same as said second set of images and said first and second annotations may be present in one and the same image, or in other words, may be associated with and annotate the same image.

This way, the amount, or number, of images necessary for training of the image object recognition algorithm to a sufficient level may be further reduced.

In some example embodiments said first set of images is instead different than said second set images and said first and second annotations may be present in different images, or in other words, may be associated with and annotate different images.

This may reduce annotation complexity and each image may be annotated in a more simple and effective manner.

According to various example embodiments , said second annotation comprises information about differences between pairs of images of the plurality of images.

Some information may in this way be shared between the pairs of images such that the annotation effort for training the image object recognition algorithm is further reduced.

The difference between a first image and a second image of the pair of images may comprise information of at least one object added to a background between the capture of the first image and the second image, while the position of objects not added to the background between the first image and the second image is unchanged.

An advantage of these embodiments is that an efficient annotation for training the image object recognition algorithm used for some applications, such as for automatic adding and/or removing objects from a surface, is achieved.

According to various example embodiments of the present disclosure the difference between a first image and a second image of the pair of images may comprise information of at least one object removed from a background between the capture of the first image and the second image, while the position of objects not removed from the background between the first image and the second image is unchanged.

The advantage of these embodiments is that an alternatively efficient annotation for training the image object recognition algorithm is achieved.

Adding or removing objects one at a time as in embodiments indicated above further facilitate provision of images with the second annotation corresponding to or comprising information about a count of objects in the image, and even more so if a user performing the annotation has access to and can use a machine vison system that captures the images to be annotated.

The difference between a first image and a second image of the pair of images may comprise information of at least one change of position of at least one object on a background between the capture of the first image and the second image.

An advantage with this is that some information about the object, such as the size of the object, may be present in both the first and second images thereby reducing annotation effort for an efficient annotation for training the image object recognition algorithm. For example, a user can remove an object from its position and/or move an object to a new position and form a new image from that, for example annotated with and/or at the new position.

The first annotation may comprise an object mask of said at least one object.

An object mask is an example of a high value annotation since it contains detailed information about the object, but such also requires relatively high effort to accomplish it and it is therefore also associated with a high cost. Hence, object mask is an annotation comprising high value information and is useful to achieve efficient training of the image object recognition algorithm. It is advantageous to supplement such (first) high, or higher value, annotation with the second annotation that advantageously is with less detailed information, thus corresponding to a low, or lower, value annotation.

According to various example embodiments of the present disclosure said second annotation comprises information of the number of objects of the said at least one object, in other words corresponding to a count of objects, which is an example of an annotation with less detailed object information than object mask(s).

Hence, the second annotation may require less effort, thus can be provided easier, faster and to a less cost than the first annotation, such that the second annotation information may be provided for and be used in larger volume training for training the image object recognition algorithm to achieve efficient training of the image object recognition algorithm. More efficient training and/or faster reaching a sufficient training level is/are achievable thanks to using both the first and second annotation.

The method may further comprise providing a third annotation, for at least a third set, said third annotation providing information of a different type than the first and second annotations about said at least one object.

This way further flexibility in provision of images and their annotation for training of the image object recognition algorithm can be achieved.

In some embodiments, the provision of the first and/or second annotation comprises receiving input information via a user interface, wherein the first and/or second annotation is based on the received input information.

Further, in some embodiments, the provision of the first and/or second annotation comprises operating the machine vision system to capture the first set and/or second set of images, and, in association with the capturing of the images of the first and/or second set, receiving said input information via the user interface. Said input information may be input via the user interface per captured image of the first set and/or second set. Said input information may further comprise information regarding a difference in number of objects between consecutively captured images of the second set, preferably between pairs formed by directly consecutive images.

Annotation via a UI is efficient, and especially regarding the second annotation when it provides less detailed object information than the first annotation and/or when the second annotation is a difference annotation. Moreover, involving the machine vision system to capture the first set and/or second set of images, and, in association with the capturing of the images receiving input information to be used for the first annotation and/or the second annotation via the user interface, further enable and contributes to flexible and efficient annotation, particularly in combination with then using both the first and second annotations in the training.

According to a second aspect of embodiments herein, it is provided a computer program product comprising computer program code, the computer program code being adapted, if executed by a processor, to perform the method according to any embodiment of the computer-implemented method of the present disclosure.

This way a simple and effective implementation of the computer-implemented method is achievable.

According to a third aspect of embodiments herein, it is provided a machine vision system being operative to recognize at least one object in captured images system, the system comprising an imaging unit configured to capture images and a processor configured to execute said method of the first aspect and/or said computer program product of the second aspect..

The method s and thus training of the algorithm is thus advantageously performed by the machine vision system itself, whereby it may be efficiently trained to recognize objects in images.

The processor may be part of the imaging unit.

This way training of the image content algorithm may be achieved simultaneously to operating of the machine vision system, which may decrease time to train the image content algorithm and thus make the training more efficient.

Further advantages with and features of the invention will be apparent from the following detailed description of preferred embodiments.

### Brief description of drawings

The invention is now described, by way of example, with reference to the accompanying schematic drawings, in which:
Fig. 1 depicts an image comprising an object, the image provided with a first annotation according to various example embodiments of the present disclosure.
Fig. 2 depicts an image comprising an object, the image provided with a second annotation according to various example embodiments of the present disclosure.
Fig. 3 depicts an image comprising objects, the image provided with a first annotation according to various example embodiments of the present disclosure.
Fig. 4 depicts an image comprising objects, the image provided with a second annotation according to various example embodiments of the present disclosure.
Fig. 5 depicts an image comprising objects, the image provided with a first annotation and a second annotation according to various example embodiments of the present disclosure.
Fig. 6 depicts a pair of images provided with a second annotation according to various example embodiments of the present disclosure.
Fig. 7 depicts a pair of images provided with a second annotation according to various example embodiments of the present disclosure.
Figs. 8a-b depicts example user interface(s) that may be used with various example embodiments of the present disclosure.
Fig. 9 depicts a pair of images provided with a second annotation according to various example embodiments of the present disclosure.
Fig. 10 depicts an image comprising objects, the image provided a second annotation according to various example embodiments of the present disclosure.
Fig. 11 depicts an image comprising objects and a background, the image provided a second annotation according to various example embodiments of the present disclosure.
Fig. 12 depicts an image comprising an object, the image provided with a first annotation according to various example embodiments of the present disclosure.
Fig. 13 depicts an image comprising an object, the image provided with a second annotation according to various example embodiments of the present disclosure.
Figs. 14a-c depict images comprising objects, the images provided with a first annotation, a second annotation and a third annotation according to various example embodiments of the present disclosure.
Fig. 15 depicts another example user interface that may be used with various example embodiments of the present disclosure.
Figs. 16a-b are schematic blocks diagrams for illustrating use of first and second annotations during training and for illustrating use of the trained algorithm for prediction.
Fig. 17 depicts schematic block diagram of various methods according to various example embodiments of the present disclosure.
Figs. 18a-b depicts machine vision systems according to various example embodiments of the present disclosure.

### DETAILED DESCRIPTION

The invention is not limited only to the embodiments described above and shown in the drawings, which primarily have an illustrative and exemplifying purpose. This patent application is intended to cover all adjustments and variants of the preferred embodiments described herein; thus, the present invention is defined by the wording of the appended claims and the equivalents thereof. Thus, the apparatus and system may be modified in all kinds of ways within the scope of the appended claims.

As mentioned in the Background, training an image content recognition algorithm relates to training a machine learning (ML) algorithm. As generally recognized, machine learning concerns algorithms that based on statistics can learn from data and generalize to unseen data. Today it is common to use deep learning and neural networks, a class of statistical algorithms. In ML, a hyperparameter is a parameter that can be set in order to define a configurable part of a model's learning process, for example of an image content recognition algorithm.

Provision of a good model, such as corresponding to an image content recognition algorithm, may be described as a mathematical optimization problem, where it is desirable to minimize the errors being made by the model, for example errors made by the image content recognition algorithm in recognizing a certain object if it is present in an image. A cost or loss function is typically defined where optimization is about minimizing the cost or loss, corresponding to minimizing said errors. In a general sense, the optimization process can be regarded training of the model, such as the image content recognition algorithm, to perform its task(s) sufficiently well, with a minimum of errors. In ML based on deep learning and neural networks, the optimization process is typically divided into two parts:
- "Neural network training", which is about simultaneously adapting typically millions of parameters that make up the so-called weights in the neural network, using the fact that the cost function is possible to differentiate regarding these parameters.
- "Hyperparameter search", which is about optimizing a smaller number of parameters, so-called hyperparameters, that have a more overall effect on the model. These may determine how many "regular" parameters, thus to be adapted in the neural network training, should be in the neural network. Normally, the cost function cannot be differentiated regarding the hyperparameters. The hyperparameter search therefore usually involves simply testing different combinations of hyperparameter values and then calculating a cost or loss for each combination. Hence, each set, corresponding to a combination, of hyperparameters to be evaluated usually means that one must perform neural network training for that set of hyperparameters and thereby get the calculated cost or loss.

An idea and finding underlying claimed embodiments of the present disclosure is that using at least two types of annotation, where a second annotation provides information of a different type than the first annotation and can be considered complimentary to the first annotation, can result in more efficient training where sufficient training can be accomplished with less effort, including for example with less annotation effort, compared to only using the first annotation as conventionally. For example, the second, or complimentary, annotation can for example be used with and to supplement the first annotation in said "neural network training", or be used use with the cost or loss function during the hyperparameter search.

Some detailed examples on how the second annotation can be used with the first annotation are provided further below, after several examples that follow next to illustrate different kind of first and second annotations, how they can relate to each other, to the images and to their content.

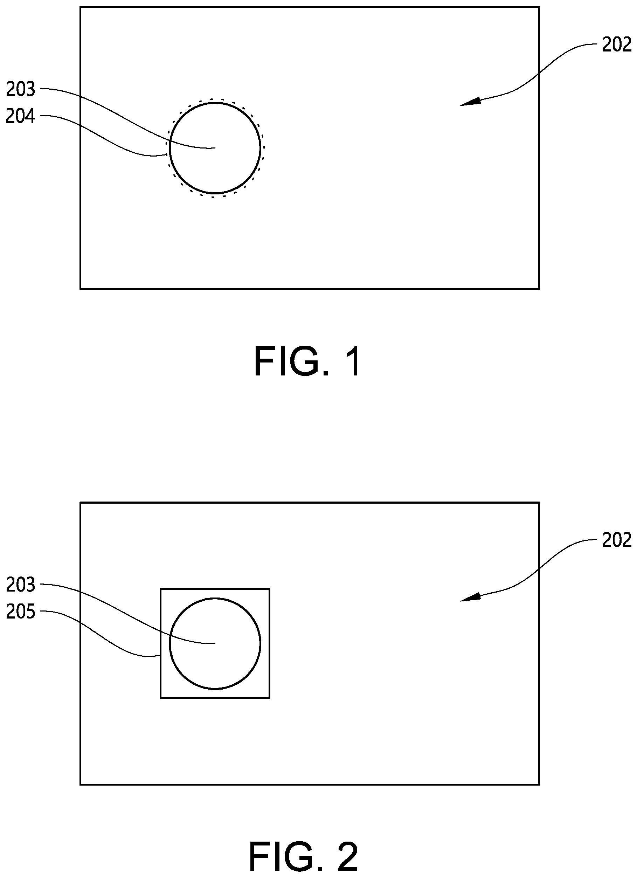

Turning now to figure 1, an example of an image 202 and annotation is depicted. As seen in figure 1, an image 202 may comprise an object 203. The image 202 may be one image obtained from a plurality of images as described elsewhere herein. The plurality of images comprise several further images that typically are different, many just slightly different, that the shown image 202 and for example contain one or more imaged instances of the object 203 and/or corresponding object(s) and/or with other content in the image that may differ from the image 202. The image 202 is here provided with a first annotation 204. In figure 1, an object mask, i.e. contouring of and/or a contour around the object 203 is used as an example of the first annotation 204 to provide information about the object 203. It should be appreciated that other types of first annotation 204 are possible.

Turning now to figure 2, another example an image 202 and annotation is depicted. As seen in figure 2, an image 202 may comprise an object 203. The image 202 may be one image obtained from a plurality of images as described elsewhere herein. The image 202 is here provided with a second annotation 205. In figure 2, a bounding box is used as an example of the second annotation 205 to provide information about the object 203. It should be appreciated that other types of second annotation 205 are possible.

By comparing figures 1 and 2 it is realized that the first and second annotations are of different types.

One or more, i.e. a first set of example images 202 as depicted in figure 1 may be provided, and one or more, i.e. a second set of example images 202 as depicted in figure 2 may be provided as disclosed elsewhere herein.

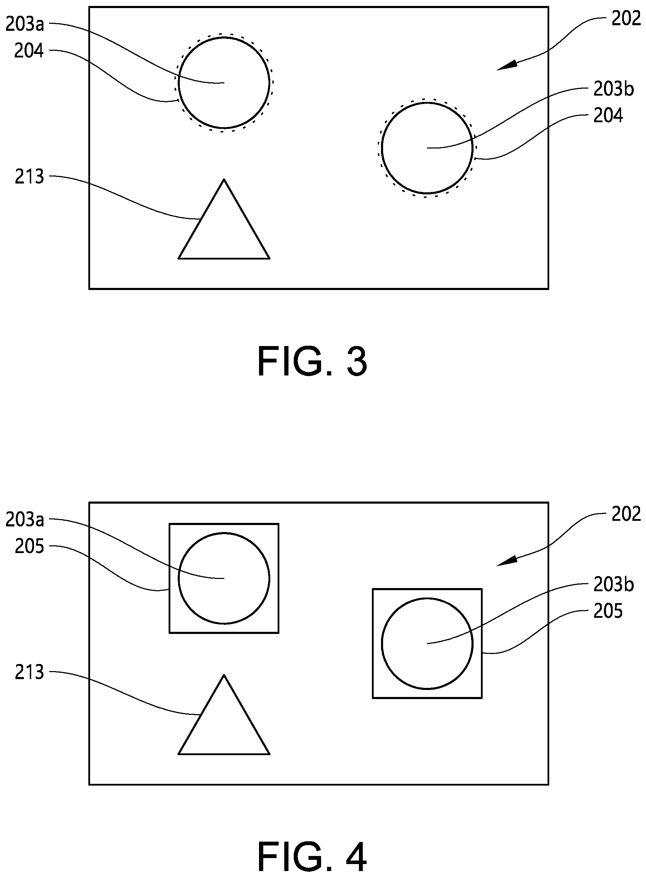

Turning now to figure 3, an example yet another example of an image 202 and annotation is depicted. As seen in figure 3, an image 202 may comprise multiple objects 203, here depicted as objects 203a, 203b. The image 202 may be one image obtained from a plurality of images as described elsewhere herein. The image 202 may further be provided with a first annotation 204. Similarly to figure 1, an object mask is used as an example of the first annotation 204. In figure 3, a second type of object 213 is also present. Figure 3 depicts this second type of object 213 as having no annotation. However, it is conceivable to annotate images for training an image content recognition algorithm by annotating objects not being said objects 203a, 203b as well, for example i if the annotated image is to be used for training regarding also the second type of object. It should be appreciated that other types of first annotation 204 are possible.

Turning now to figure 4, a yet further example of an image 202 and annotation is depicted. An image 202 may comprise multiple objects, here depicted as objects 203a, 203b. The image 202 may be one image obtained from a plurality of images as described elsewhere herein. The image 202 may further be provided with a second annotation 205. Similarly to figure 2, a bounding box is used as an example of the second annotation 205. In figure 4, also a second type of object 213 is present. Figure 4 depicts this second type of object 213 as having no annotation to account for this second type of object 213. However, it is conceivable to annotate images for training an image content recognition algorithm by annotating objects not being said objects 203a, 203b as well, for example if the annotated image is to be used for training regarding also the second type of object. It should be appreciated that other types of second annotation 205 are possible.

One or more, i.e. a first set of example images 202 as depicted in figure 3 may be provided, and one or more, i.e. a second set of example images 202 as depicted in figure 4 may be provided in accordance with methods disclosed herein.

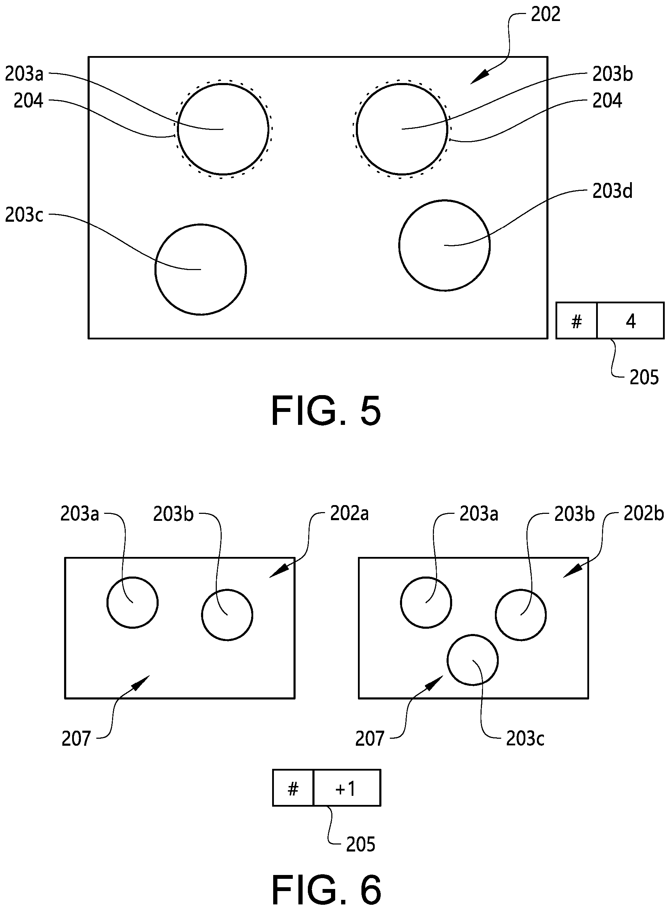

Turning now to figure 5, an example according to various example embodiments of the present disclosure is depicted. As seen in figure 5, a first annotation 204 and a second annotation 205 is present for the same image 202. The first annotation is here exemplified by an object mask, whereas the second annotation is here exemplified by a count of a objects. In the shown example, 4 objects are counted. In figure 5, it is exemplified that two of the objects 203a, 203b are provided with the first annotation 204 and that all four objects 203a, 203b, 203c, 203d are provided with the second annotation 205. It should be appreciated that these depictions are schematic and exemplifying, and the number of objects present in images be higher, even up to hundreds of objects.

Turning now to figure 6, an example according to various example embodiments of the present disclosure is depicted. As seen in figure 6, a second annotation 205 is provided to a first image 202a and a second image 202b of a pair of images 202. The pair images may be obtained from a plurality of images as described elsewhere herein. In these example embodiments, the second annotation 205 may comprise information about differences between pairs of images of the plurality of images. As seen in figure 6, the second annotation 205 may comprise information of at least one object 203c added to a background 207 between the capture of the first image 202a and the second image 202b while the position of objects 203a, 203b not added to the background 207 between the first image 202a and the second image 202b may be unchanged. While figure 6 depicts merely one object 203c added to the background 207, it should be appreciated that any plurality of added objects may be annotated in practice.

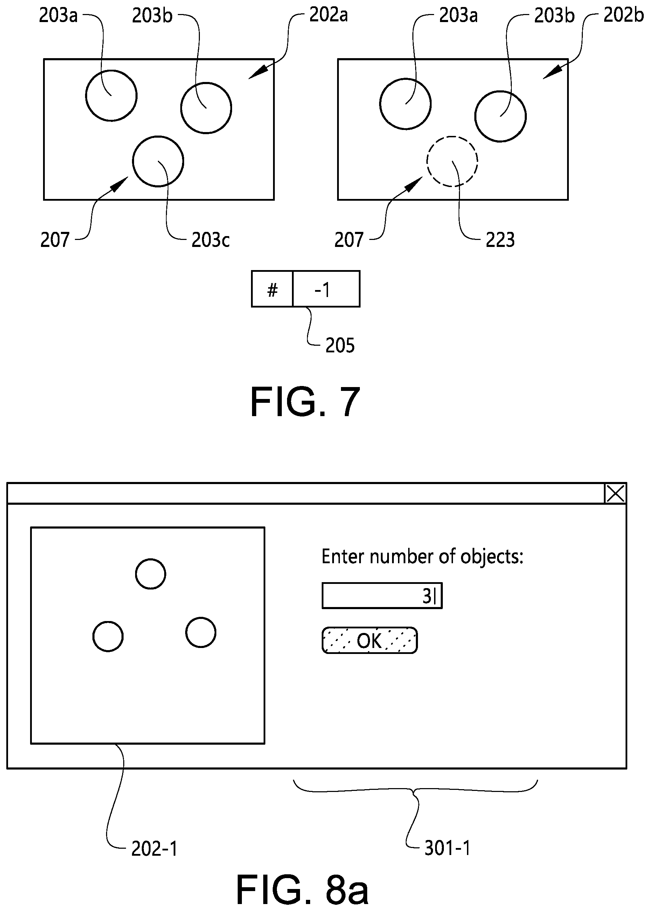

Turning now to figure 7, an example according to various example embodiments of the present disclosure is depicted. As seen in figure 7, a second annotation 205 is provided to a first image 202a and a second image 202b of a pair of images. The pair images may be obtained from a plurality of images as described herein. In these example embodiments, the second annotation 205 may comprise information about differences between pairs of images of the plurality of images. As seen in figure 6, the second annotation 205 may comprise information of at least one object 203c removed from a background 207 between the capture of the first image 202a and the second image 202b while the position of objects 203a, 203b not removed to the background 207 between the first image 202a and the second image 202b may be unchanged. While figure 7 depicts merely one object 203c removed from the background 207, it should be appreciated that any plurality of removed objects may be annotated in practice.

Figures 8a-b schematically depicts example user interfaces (UIs) that may be used with various example embodiments of the present disclosure. Using a count difference annotation as second annotation, as discussed above in relation to figures 6-7, facilitates efficient and simple annotation corresponding to that that images can be annotated with this annotation with low effort, for example using a UI in the form of one or more graphical user interfaces (GUIs) as shown in figures 8a-b. The GUI(s) may be displayed on computer screen or similar.

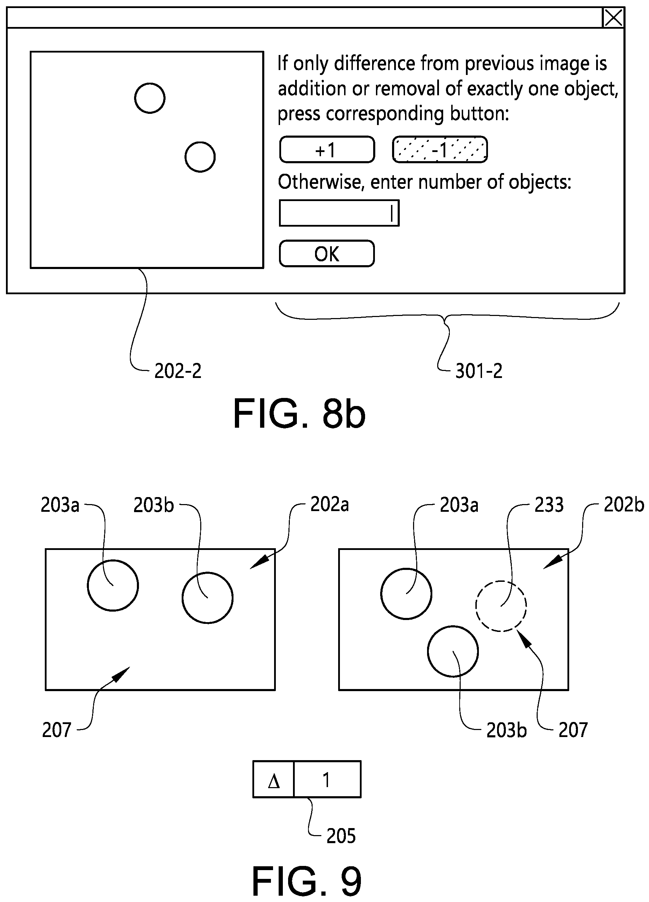

The shown example GUIs may be used separately or together, and could even be combined as a single GUI, for example so that the one shown in figure 8a is shown on top of the one in figure 8b. The GUI(s) may, as shown in the figure, display a pair of images 202-1, 202-2, that may be part of said plurality of images, each image comprising one or more objects that the annotation relates to, for example corresponding to object(s) 203 in other examples herein. The pair may be part of a sequence of images where each pair of directly neighboring images of the sequence differ by exactly one object, for example advantageously captured by the same or similar machine vision system that is to use the trained algorithm. The UI may be part of a software that also controls, and/or execute on a computer that also controls, the machine vision system so that capturing of the images can be performed in connection with the annotation via the GUI(s) by the same user that thus also may operate the machine vision system, camera thereof and control the number of object in images that are captured.

The pair of images may be shown at the same time on the GUI(s) with possibility for a user to enter the number of objects in respective image via an respective input part 301-1, 301-2 of the GUI(s), for example enter an integer 3 using input part 301-1, as exemplified in the figure, since the image 202-1 shows 3 objects and may enter a number 2 objects using input part 301-2 since the image 202-2 shows 2 objects. This can be used to accomplish a count annotation. The input part 301-2 also has the possibility for the user to use buttons to indicate that one object has been added or removed in image 202-2 compared to image 202-1. This may be used to accomplish a difference annotation although it is of course possible to let this simple way to annotate to alternatively or additionally result in a conventional count annotation.

With control of the machine vision system and the number of object to be imaged, it is realized that a user for example can add a known number of objects to be imaged, capture a first image of a sequence, for example corresponding to image 202-1, annotate it by entering the number of objects using for example input part 301-1 or 301-2. Then the user can remove one of the objects, capture a new image corresponding to image 202-2 and annotate it by simply pressing the -1 button, etc. A very long sequence with many annotated images can be accomplished this way, with very low effort.

In case of a longer sequence where each pair of the sequence, thus also overlapping pairs, are differing by a single object, it may be advantageous to within the GUI(s) move an image just annotated, for example annotated by use of the input part 301-2 in figure 8b, to another GUI part or GUI as in figure 8a, where the just annotated image serves as reference for next image to be annotated. Hence, for example so that the just annotated image is moved and displayed where image 202-1 is located in figure 8a and indicate that this is an already annotated image, such as labelling it "last annotated image" or similar, and/or indicating that is just for reference. The next image of the sequence then becomes image 202-2 and can be compared side by side with the just annotated one. This way comparison can be made in a consistent, similar and simple manner throughout the sequence of images, where each image but a first one can be annotated using the -1 or +1 button to accomplish difference and/or count annotations for the images.

Turning now to figure 9, an example according to various example embodiments of the present disclosure is depicted. As seen in figure 9, a second annotation 205 is provided to a first image 202a and a second image 202b of a pair of images. The pair images may be obtained from a plurality of images as described herein. In these example embodiments, the second annotation 205 may comprise information about differences between pairs of images of the plurality of images. As seen in figure 9, the second annotation 205 may comprise information of at least one change of position of at least one object 203b on a background 207 between the capture of the first image 202a and the second image 202b. While figure 7 depicts merely one object 203b having changed positions on the background 207, it should be appreciated that any plurality of positional changes to objects may be annotated in practice.

What is illustrated by the examples depicted in figures 6-9 may be combined to form more complex annotations in practice. For example, it is conceivable that any feasible number of objects may be removed while any feasible number objects another is added, while any feasible number of objects remain in their current position and/or having changed positions.

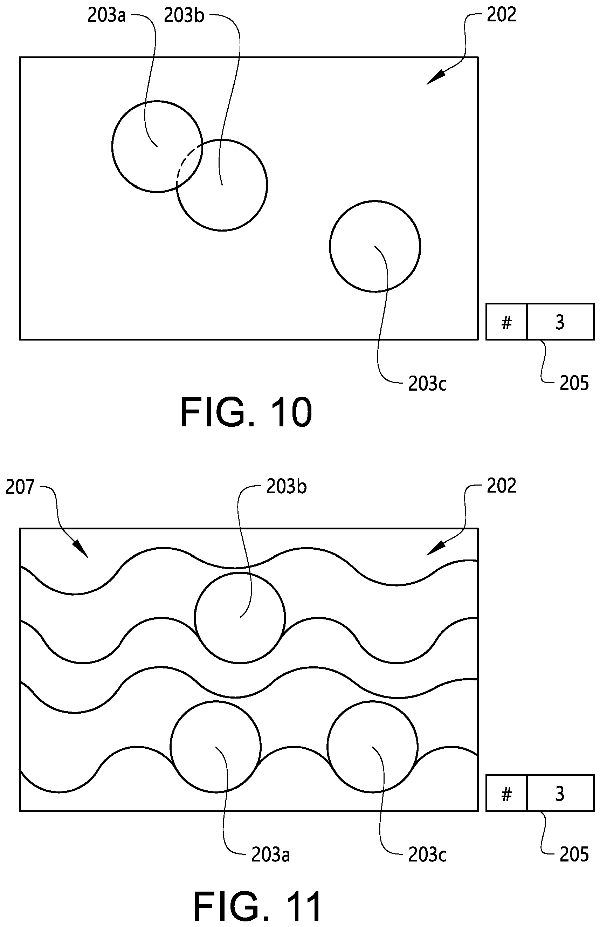

Turning now to figure 10, an example according to various example embodiments of the present disclosure is depicted. As seen in figure 10, an image 202 may comprise objects 203a, 203b, 203c. Object 203a here overlaps with object 203c, which may occur in practice. The image 202 may be obtained from a plurality of images as described in the methods herein. The image 202 may further be provided with a second annotation 205. In figure 10, the second annotation 205 is exemplified here as a count of objects present in the image 202. It should be appreciated that other types of second annotation 205 options are possible.

Turning now to figure 11, an example according to various example embodiments of the present disclosure is depicted. As seen in figure 11, an image 202 may comprise objects 203a, 203b, 203c on a background 207. The background 207 shown here is depicted as waves, however many options such as conveyor belts, industrial machinery, pallets, or boxes where various colors, lighting and textures are possible. The image 202 may be an image obtained from a plurality of images as described herein. The image 202 may further be provided with a second annotation 205. In figure 11, the second annotation 205 is exemplified here as a count of objects present in the image 202. It should be appreciated that other types of second annotation 205 are possible.

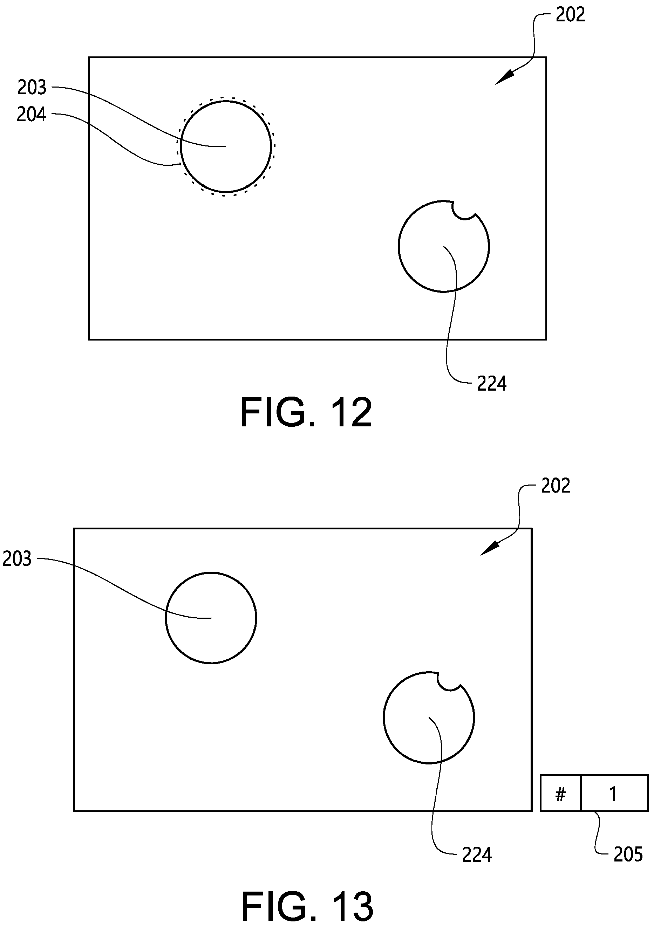

Turning now to figure 12, an example according to various example embodiments of the present disclosure is depicted. As seen in figure 11, an image 202 may comprise an object 203 and a defect object 224. The image 202 may be an image obtained from a plurality of images as described herein. The image 202 may further be provided with a first annotation 204. In figure 11, an object mask, i.e. a contouring around the object 203, is used as an example of the first annotation 204 to provide information about the object 203. It should be appreciated that other types of first annotation 204 are possible.

Turning now to figure 13, an example according to various example embodiments of the present disclosure is depicted. As seen in figure 13, an image 202 may comprise an object 203 and a defect object 224. The image 202 may be an image obtained from a plurality of images as described herein. The image 202 may further be provided with a second annotation 205. In figure 12, a count of objects is used as an example of the second annotation 205 to provide information about the object 203. It should be appreciated that other types of second annotation 205 are possible.

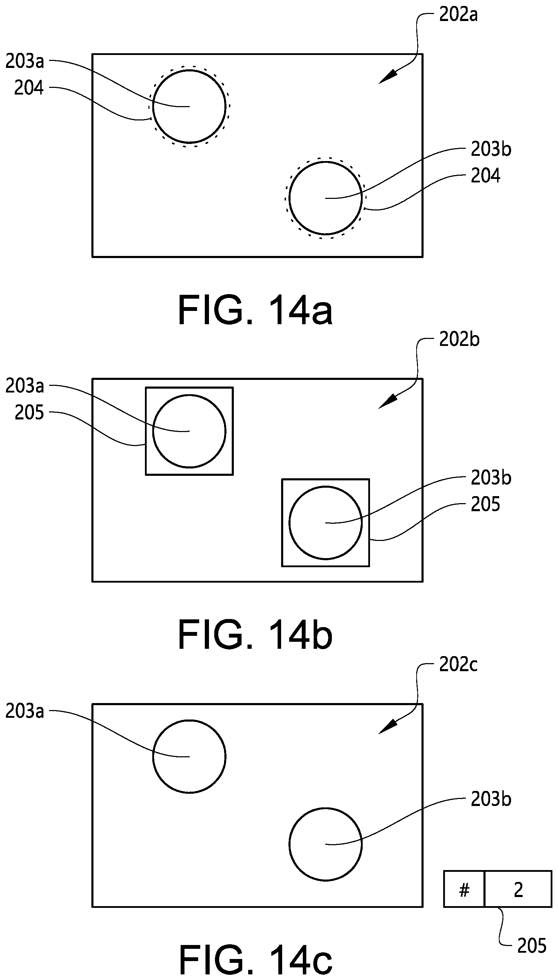

Turning now to figures 14a, 14b and 14c an example according to various example embodiments of the present disclosure is depicted. As seen in figure 14a, an image 202a may comprise objects 203a, 203b. The image 202a may be an image obtained from a plurality of images as described herein. The image 202a may further be provided with a first annotation 204. In figure 14a, object masks, i.e. corresponding to contouring of and thus around each object 203, are used as an example of the first annotation 204 to provide information about the objects. It should be appreciated that other types of first annotation 204 are possible. As seen in figure 14b, an image 202b may comprise objects 203a, 203b. The image 202b may be an image obtained from a plurality of images as described herein. The image 202b may further be provided with a second annotation 205. In figure 14b, bounding box object masks are used as an example of the second annotation 205 to provide information about the objects. It should be appreciated that other types of second annotation 205 options are possible. As seen in figure 14c, an image 202c may comprise objects 203a, 203b. The image 202c may be an image obtained from a plurality of images as described herein. The image 202c may further be provided with a third annotation 206. In figure 14c, a count of objects is used an example of the third annotation 206 to provide information about the objects. It should be appreciated that other types of third annotation 206 are possible.

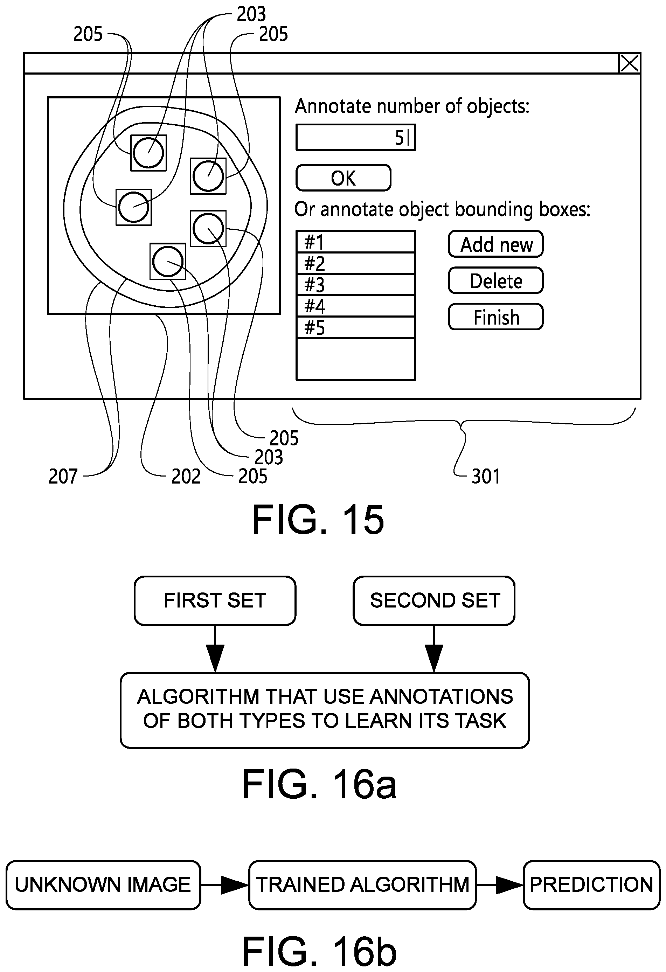

Fig. 15 schematically depicts another example UI in the form of a GUI that may be used with various example embodiments of the present disclosure. The example shows how single and relatively simple UI in an efficient and flexible way can be used to accomplish a first annotation and/or second annotation of an image 202 that may be part of said plurality of images. The depicted GUI shows the image 202 and an input part 301 with explanatory text, input field and input buttons. The image 202 comprises objects 203 that the annotation relates to, for example corresponding to the object(s) 203 in other examples herein. The image 202 also schematically shows a background 207 that may correspond to the background 207 in previous examples.

The input part 301, including the text, enables a user to, in an input field, enter the number of objects 203 that are present in the image 202. In the example shown there are 5 objects in image 202 and an integer 5 entered as an example in the input field. This part of the GUI can thus be used to accomplish a count annotation regarding the image 202 and the objects 203, for example corresponding to a second, complimentary annotation, as discussed herein.

Moreover, the GUI also allows the user to instead use bounding boxes for annotation. The user may add a respective bounding box, for example one at a time, moving and possibly sizing each until there is a bounding box 204 placed around each object 203 as shown in the figure. The bounding boxes may correspond to the first annotation or second annotation as discussed herein. When the bounding boxes are used to accomplish the first annotation, it is realized that the bounding boxes and the number of such added, one around each of the total of objects present in the image 202, at the same time also can be used to provide second annotation, complimentary to the first annotation, and corresponding to a count of the objects 203.

It should be realized that a GUI as shown in figure 15 can be combined with principles of the GUI shown in Figure 8 to accomplish a GUI that can be used with even greater flexibility to accomplish first and/or second annotations of images.

Fig. 16a-b are schematic blocks diagrams for illustrating use of first and second annotations during training and for illustrating use of the trained algorithm for prediction. Figure 16a illustrates that said first and second sets of the plurality of images, with the first and second sets being annotated with the first annotations and second annotations, respectively, are used in training of the algorithm. That is, the algorithm uses the first annotations, that is, of both types, to learn its task. The input images are in this case, at least to some extent through the annotations, known to the algorithm and this is utilized in the training. Detailed examples of how the two annotations can be used in the training are provided separately below. Figure 16b illustrates a situation when a trained algorithm, such as resulting from what is shown in figure 16a, is being used for prediction, that is, an algorithm that has been trained to at least some extent and operates on an image with content that is unknown to the algorithm, The algorithm attempts to predict the content according to the task that the algorithm has been trained for, for example to find if a certain object or objects are present in the image and/or their location in the image and/or how many objects are present.

As already mentioned in the introduction to the detailed description, the first and second annotations may be used in different ways during training of the algorithm. Next follows three different detailed examples regarding this.

### Example 1 - Second annotation used during hyperparameter search

The perhaps easiest way of using also the second, complimentary, annotation in the training may be to use the second, complementary, annotations only for hyperparameter search to ensure that the algorithm works.

Assume there are 20 images annotated with bounding boxes as first annotation and 500 images annotated with count as the second, complimentary. annotation. The 20 images with first annotations are to be used for training a neural network that predicts bounding boxes, for example in a conventional manner.

Before training it is configured which variant of the neural network should be trained, say a network of size S, M or L, and how the training should be done, for example if rotation augmentations should be used or not. This results in six alternatives (3x2) and each of the six neural network alternatives are trained using the 20 images with the first annotations. Then, the six resulting networks operate on the 500 images with the second, complimentary, annotations and the results are logged, that is, how many correct predictions regarding count that respective trained neural network are making regarding the 500 images. The neural network alternative that predicted a number of bounding boxes that best matches the counts for the 500 images is then selected.

Since the test has been performed on 500 images it is possible to be more confident that the best alternative was selected compared to if only the 20 images with the first annotation were used. In the example it is assumed that the 20 images are enough for at least one setting to learn to predict bounding boxes well. If this is not met, no matter how many images with the complimentary count annotation there are, it will not help of course.

Further, it should be appreciated that once having the 20 + 500 annotated images, the described training process for reaching said best trained neural network may be automatized. Moreover, count is an annotation that can be provided with low effort and that also can be automatized easier than bounding box or other more high values annotations. As should also be realized, the example would work in a similar also if the first annotation would be object mask or center point, etc.

Moreover, further developments in line with this example are conceivable. For example, use with so-called "bagging", which involves training several networks and taking the average value, but the average value may be weighted so that networks that perform better on the 500 images have greater influence.

### Example 2 - First and second annotation used in neural network training

There are many conceivable approaches to how several types of annotations, such as the first and second annotations, can be used in the neural network training. More exactly how this can be done and how well it will work, for example depends on the specific case in questions and on which types of annotations that are being used and combined. The skilled person is, based on this example and understanding of the principles disclosed herein, able to adapt and find a working solution for his/hers specific case and annotations.

One way is to use a neural network architecture with a shared foundation, a so-called backbone network, that accounts for say 80-90% of the calculations, and then have several smaller so-called heads that perform the remaining calculations required to make a certain type of prediction based on joint calculations in the backbone network. This can result in more efficient training.

Assume there is a backbone B, as well as a head H1 that can predict, say segmentation, or object, masks and another head H2 that can predict, say midpoints, or center points. All three networks B, H1, H2 have a large number of parameters each, let's call them pb, ph1, and ph2, respectively. If B+H1 is trained as a unit (a network), then in each iteration of an optimization process, pb and ph1 are updated. Correspondingly for B+H2.

Both B+H1 and B+H2 may be trained at the same time and share pb, for example B+H1 using images with a first annotation corresponding to segmentation masks and B-H2 with a second annotation corresponding to midpoints. Set up in a proper way, such simultaneous training processes should contribute to B getting a better general ability, as it will have the opportunity to "learn" from both processes. In other words, when B gets better, B+H1 also gets better and thus training of B+H2, using images with the second annotations, contributed to making B+H1 better in addition to would be possible from B+H1 using images with the first annotations.

### Example 3 - Second annotation is a difference annotation

Difference annotations have been discussed above but none of the previous examples are using such annotation, which this example is about.

Assume there is an image 1 that contains three objects, annotated with center points as the first annotation. Further assume there is an image 2 with one of the objects from the first image removed, annotated with a difference annotation corresponding to "one object removed" as the second annotation.

Moreover, assume there is a method for training a neural network that predicts center points. The method should be able to calculate how wrong a prediction is, corresponding to a loss function.

When having an image annotated with center points, here used as the first annotation, the distance to the nearest true center point can be used as a measure of how wrong the prediction is and thus be used by the loss function. Further, it is from the second annotation known that image 2 contains two of three objects from image 1, but not which ones. This can be utilized by running prediction on image 2, take the three predictions that best match the three objects from image 1, order them by how well they match, and throw away the worst one. If the algorithm works reasonably well, the two remaining predictions will correspond to the two objects that remain in image 2.

The loss function can then be computed under the assumption that the two annotations from image 1 that are closest to the two strongest predictions in image 2 are the ones that do not correspond to the removed object.

At each iteration of the training, corresponding analysis is performed. Hence, there is no need to "guess" correctly from the beginning which annotations are correct for image 2. Obviously, the guesses will be worse at the beginning, so in practice it may be needed to run a couple of iterations of the training using the first annotations before the second, complementary, annotations are used and included.

It should be realized from this example that a relatively simple second annotation like a count difference, which can be provided with low effort, still can contain very useful information that in combination with the first annotation contributes to efficient training.

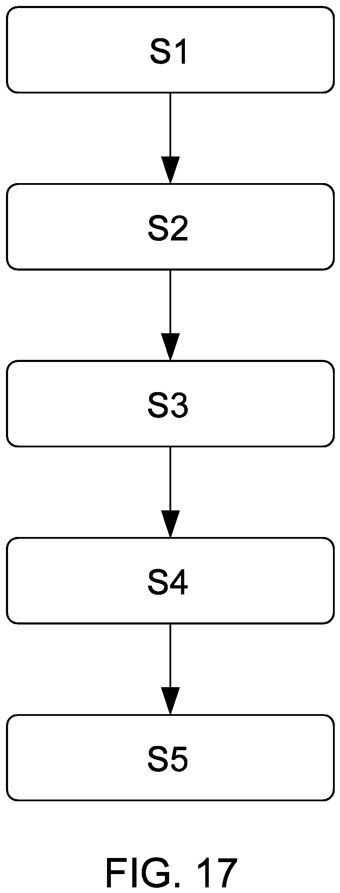

Figure 17 depicts schematic block diagram of a method with various actions, according to various example embodiments of the present disclosure. The method may comprise the step of obtaining S1 a plurality of images. In other words, a plurality of images may be captured by, e.g. an imaging unit, such as a camera, of the machine vision system 100. Out of the plurality of obtained images, at least one image 202 comprises the at least one object 203. Various examples of such images 202 are depicted in figures 1-15. It should be appreciated that within the context of various methods described herein, some of the obtained images may not comprise the at least one object 203. These images may e.g. only comprise a background 207, or other objects different from the at least one object 203. Training image object recognition algorithm with images where the least one object 203 is not present may in these example embodiments result in further detection reliability of the algorithm.

As seen in figure 17, the method may further comprise the step of providing S2 a first annotation 204 for a first set of the plurality of image. Said first annotation 204 providing information about the at least one object 203. From the above wording, it is understood that the first annotation should always at least comprises information on the species of at least object 203. For example, if the at least one object 203 to be recognized is a bolt, the first annotation will always contain that there is a bolt in the image 202. Aside from this basic type of information, the first annotation comprises information about said at least one object 203, where various examples are possible. The first annotation 204 may comprise information about at least one of the following: an object mask, a bounding box, one or more classes the at least one object 203 belongs to, one or more classes the at least one object 203 does not belong to, a count of the at least one object 203 in the image 202, a shape of the at least one object 203 in the image 202, a size of the at least one object 203 in the image 202, a color of the at least one object 203 in the image 202, a position of the at least one object 203 in the image 202. Combinations of various examples may be possible to form a first annotation with further detailed information about the least one object 203 present in the image 202. As used herein, and as already indicated above, relevant properties identified by the annotation information should be such that can be utilized in the training. Since the annotation information is for use when training is to be performed, using the image that the annotation information is associated with, it is only meaningful with properties for which it would be beneficial for the training to know that an image to train contains content with such properties.

The first annotation 204 may be provided manually, e.g. by a user, such as already has been discussed above. The wording said first set may herein be defined as at least one image of the plurality of images. Another term for the first set is a sub-set of the plurality of images. The annotation as such, format of annotated images, etc., may be as in the prior art. The annotation information may be obtained by being provided, such be input to the system, by a user, for example operator, of the machine vision system, such as via a user interface, UI, preferably a graphical user interface (GUI). It is realized that the images, for example captured by the machine vision system, are valid for the annotation information, or in other words that they are in accordance with the annotation information, and/or vice versa. The annotation information may be fully or partly predetermined, and the user may for example, via a UI, select from predetermined annotation information, for example from a list, which specific predetermined information to be used for the images.

As further seen in figure 17, the method may further comprise the step of providing S3 a second annotation 205, for at least a second set of the plurality of images. The second annotation 205 may provide information of a different type than the first annotation 204 about the at least one object 203. The second annotation 205 may comprise information about the at least one object 203. In principle, the information about the at least one object 203 comprised in the second annotation 205 is similar to what has been explained above regarding the first annotation 204. Importantly, however, the first and second annotations 204, 205 should in the context herein, and as already discussed above, differ from each other. In other words, said second annotation should provide information of a different type than the first annotation regarding the object that the image content recognition relates to. This can also be expressed as that the first and second annotations should be of different types. For example, if the first annotation 204 is an object mask and result in an object mask for each object in the image 202, then the second annotation 205 may be different from a boundary mask, for example correspond to a count and thus comprise information about the number of objects 203 in the image 202.

In various example embodiments said first set of images is the same as said second set of images, e.g. annotated with first and second annotations 204, 205 as exemplified in e.g., figure 5. In various example embodiments, said first set of images may be a different set to said second set images.

In some embodiments, the provision of the first and/or second annotation in step S2 and/or S3 comprises receiving input information via a user interface, for example the input parts 301, 301-1, 301-2, wherein the first and/or second annotation is based on the received input information. The user interface may be as exemplified in figures 8 and 5.

Further, in some embodiments, provision of the first and/or second annotation comprises operating the machine vision system to capture the first set and/or second set of images, and, in association with the capturing of images of the first and/or second set, said input information is received via the user interface. Said input information may be input via the user interface per captured image of the second set. Said input information may comprise information regarding a difference in number of objects between consecutively captured images of the second set.

As also seen in figure 17, the method may further comprise the step of training S5 said image content recognition algorithm using said first and second annotations 204, 205. For example, training S5 may comprise formulating a loss function that takes all available types of annotation into account, i.e., wherein errors are accounted for, and an optimization is subsequently solved using e.g. back-propagation via a neural network. Alternatively, a first annotation might be used to optimize a first aspect of the image content recognition algorithm, while a second annotation is used to optimize a second aspect of the image content recognition algorithm. It is appreciated that the skilled person understands various manners in which the training S5 may be conducted. Further, the terms "training" and "optimization" are readily understood in the art and may be synonymous in certain contexts.

In various example embodiments, said training S5 said image content recognition uses said first annotation 204 before said second annotation 205. In other the image content recognition algorithm may be trained on images comprising said first annotation 204 to achieve a baseline object recognition capability, whereas images comprising said second annotation may be used at subsequent verification stage in order to test whether the object recognition capability is sufficient. For example, the image content recognition algorithm may be trained to recognize pepperoni slices on a pizza. In other words, in this example, the at least one object 203 is a pepperoni slice. A plurality of images of pizzas may be obtained wherein a first set of images 201a may be provided with a first annotation 204 which comprises information about the shape and position of the pepperoni slices. The image content recognition algorithm may be trained to recognize pepperoni slices based on this first annotation 204 firstly. Subsequently, according to these embodiments, a second annotation 205 is provided to a second set of images 201b.

In various example embodiments, said first annotation 204 provides more detailed information about the at least one object 203 in the at least one image 202 than said second annotation 205. It is appreciated that there are numerous possible annotations of images in general within the context of methods disclosed herein. Principally, what is meant by more detailed information within the context of an annotation is the amount of data to annotate. In other words, certain annotations may be more granular or precise, meaning in the context of methods disclosed herein, that such annotations provide more detailed information about the at least one object 203. This may also be expressed as the annotation has higher value than another annotation that provide less detailed information. As an example, using an object mask as annotation, thus with information about the shape of the at least one object 203, may be considered more detailed information about the at least one object 203 than a center point or count of the at least one object 203 in the image 202. An alternative term for an annotation providing more detailed information about the at least one object 203 may be "high-level" annotation" or "high-value" annotation, whereas an annotation providing less detailed information about the at least one object may be a "low-level" annotation" or a "low-value" annotation.

Annotations comprising more detailed information about the at least one object 203, thus high value annotation, typically require more effort and/or time to annotate by a user and are thus more costly for algorithm training purposes in general. It is conceivable that a smaller number of "high-value", and in other words "high-cost" annotations, i.e. annotations comprising more detailed information about the at least one object may be provided together with a larger number of "low-value" (in other words "low-cost") annotations for the purposes of methods described herein. During training of the image content recognition algorithm, the algorithm may first learn object features from the "high-value" annotations. Subsequently the "low-value" annotations may be used to e.g., adjust parameters and to test the prediction accuracy of the algorithm. It should be appreciated that the method may be sequenced in alternative ways, e.g., such that the image content recognition algorithm is first trained on images comprising a first annotation 204 of a more detailed information, then trained on images comprising a second annotation 205 of less detailed information. During the latter, it may occur that the image content recognition algorithm is not sufficiently trained on images comprising the first annotation 204, i.e. the image content recognition algorithm still makes errors in recognizing objects. In cases of these "failures" or insufficiencies in training, it may in these instances be possible to revert back providing more images comprising the first annotation 204. Numerous iterations may be possible, though not necessarily needed, to achieve a sufficiently trained image content recognition algorithm. These examples may allow the image content recognition algorithm to be trained using only low, or even the lowest, amount of "high-value" first annotations 204. Over the course of training the image recognition algorithm, the value of "high-value" annotations may diminish, and at some point, a "low-value" annotation may provide almost equal information to sufficiently train the image recognition algorithm. As such, the methods disclosed herein may further reduce the annotation effort needed to train the image recognition algorithm.

As depicted in figures and various example embodiments, the first annotation 204 may comprise an object mask of said at least one object 203. The term object mask may be as in the prior art. An alternative term for an object mask may be an object segmentation mask. To provide an annotation comprising an object mask, a user may contour the object manually via a graphical user interface, with or without support from suitable algorithms such as Watershed, Grabcut, or from a deep-learning technique such as Segment Anything. However, various annotation tools are envisioned in light of the methods disclosed herein. In various example embodiments the second annotation 205 may comprise information of the number of objects of the said at least one object 203. A combination of an object mask as a first annotation and information of the number of objects may illustrate a specific example of a "high-value" annotation and a "low-value" annotation as described above.

However, the terms "high-value" and "low-value" are relative terms and there are numerous possibilities of combinations of first and second annotations 204, 205 within the scope of the methods described herein. For example, a first annotation 204 comprises a bounding box, whereas the second annotation 205 comprises information of the color of the object 203. In such an example, the first annotation 204 would be considered a "high-value" annotation when compared to the second annotation 205, which would be a "low-value" annotation. However, in another example, the first annotation 204 may be an object mask whereas the second annotation 205 may comprise a bounding box. In this example, the bounding box may be considered a "low-value" annotation compared to the object mask, which may be considered a "high-value" annotation in relation. These examples are to be a seen as examples and it is appreciated that the skilled person understands that numerous different annotations combinations may be used in the context of methods described herein.

As also seen in figure 17, in various example embodiments, the method may further comprise the step of providing S4 a third annotation 206 for at least a third set of the plurality of images, said third annotation 206 providing information of a different type than the first and second annotations 204, 205 about the at least one object 203. An example of images according to this optional method step is depicted in figures 14a-c. The above discussions regarding annotation details similarly apply for the third annotation 206.

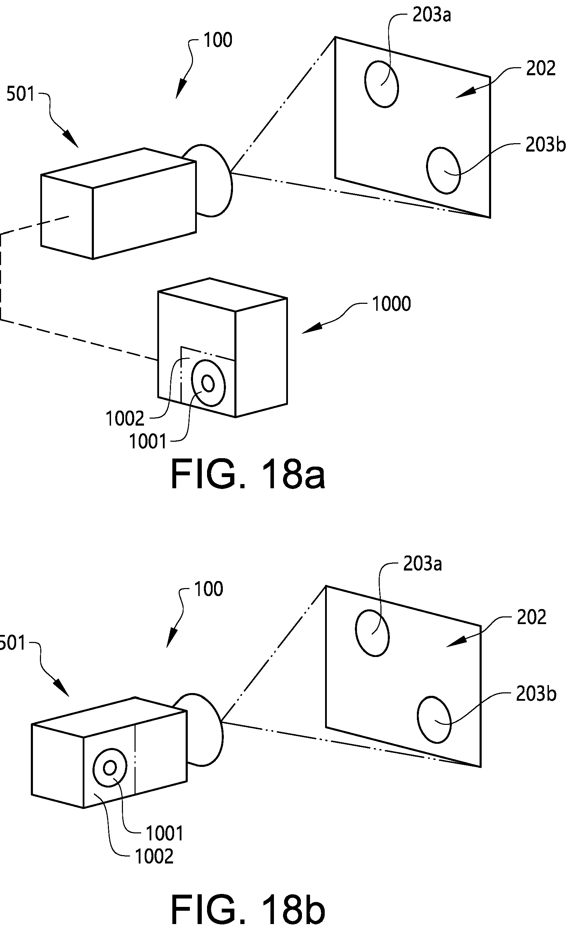

Figure 18a schematically depicts a machine vision system 100 operative to recognize at least one object 203 in captured images. The system 100 is an example of such system mentioned above and may comprise an imaging unit 501, corresponding to a camera, configured to capture images, such as said plurality of images including an image 202 as in previous examples, for example with objects 203a,b that may be as discussed above and that after capture may be annotated as disclosed herein. The machine vision system 100 further comprises a processor 1002 configured to execute a computer program product 1001 comprising computer program code adapted to, if executed by the processor 1002, to perform a method and actions as discussed above, such as in connection with figure 17. In figure 18a the processor 1002 is part of a processing unit 1000, such as a computer, that is separate from but may be connected to the imaging unit 501.

In figure 18b the difference compared to figure 18a is that the processor 1002 is part of the imaging unit 501. The imaging unit 501 may be a camera, e.g. an InspectorP series camera with built-in processing capabilities, a streaming camera connected to a computer, a 2D or 3D-camera, wherein the camera is configured for use with an image content recognition algorithm.

It should be realized that the machine vision system 100 may fully or partly be involved, such as be configured, to also perform annotation as disclosed herein regarding, and preferably in association, with capturing of the images. The annotation may for example, at least partly, be accomplished via one or more user interfaces, for example GUIs, as exemplified above. The user interface(s) may be part of the computer program product and may be presented to a user via a UI providing unit (not shown), for example a display, such as monitor or computer screen , part of the machine vision system and/or connected to it. The UI providing unit may be connected to the imaging unit 501 and/or the processing unit 1000, for example a computer.

### Feasible modifications of the invention

The computer-implemented methods described here are mainly concerned with training of an image object recognition algorithm of a machine vision system. The image object recognition algorithm may be deep learning method like a convolutional neural network, such as e.g. ResNet or MobileNet, or it may be a variation and/or combination of classical machine vision algorithms, e.g. using features such as SIFT or HOG. Some non-limiting examples of image recognition tasks are given as follows.
- Anomaly detection, i.e. whether an object, e.g. a circuit board present in an image comprises looks as usual, in other words "as it should" or "normal", or whether there something anomalous about it, e.g. scratches, blobs of misplaced solder, missing components or the like.
- Classification, i.e. whether an object present in an image likely belongs to a pre-determined object class, e.g. whether there is a gear or a screw present in the image.
- Counting, i.e. the number of instances an object is present in an image.
- Localization, i.e. the position of at least one object 03 present in an image. The position may be represented by cartesian coordinates within a 2-dimensional plane of the image.
It should be appreciated that the skilled person understands that any combination of image recognition tasks is possible within the scope of the methods, computer programs and systems disclosed herein, e.g., the image recognition tasks of classification and counting may be combined to achieve according to the needs of the skilled person. Another non-limiting example of such a combination of image recognition tasks may be to detect position(s) of objects, count the objects, classify objects within a pre-determined category, and to detect any anomalies present in the objects.

The image object recognition algorithm may be trained to perform various image recognition tasks regarding numerous objects that may be of different types, e.g., gears, bolts, nuts, screws, nails, various foodstuffs, various hygienic articles, and the like. As such, said machine vision system may be operative to recognize at least one object in images captured by the machine vision system. As realized by the skilled person, the algorithm performs the image content recognition according to tasks based on image recognition, that is, image recognition tasks, that the image content recognition algorithm is configured, such as at least partly trained and/or trainable, to perform. These may differ between different algorithms and applications. Hence, the image content for recognition and properties of interest for the annotation typically differ between different algorithms and tasks. The image content recognition algorithm and tasks that it performs are as such no special ones for embodiments herein and may be conventional, such as in the prior art.

It should be realized that under normal circumstances, everything from a handful to several thousand images may be used to train the image recognition algorithm. The actual number of images needed depend on the complexity of the image recognition task.

Various examples have been described. These and other examples are within the scope of the following claims.

## Claims

1. A computer-implemented method for training of an image object recognition algorithm of a machine vision system (100), said machine vision system (100) being operative to recognize at least one object (203) in images captured by the machine vision system (100), said method comprising:
- obtaining (S1) a plurality of images wherein at least one image (202) comprises the at least one object (203),
- providing (S2) a first annotation (204) for a first set of the plurality of images, said first annotation (204) providing information about the at least one object (203),
- providing (S3) a second annotation (205) for at least a second set of the plurality of images, said second annotation (205) providing information of a different type than the first annotation (204) about the at least one object (203),
- training (S5) said image content recognition algorithm using said first and second annotations (204, 205).

2. The computer-implemented method according to claim 1, wherein said first annotation (204) provides more detailed information about the at least one object (203) in the at least one image (202) than said second annotation (205).

3. The computer implemented method according to any one of claims 1 or 2, wherein said training (S5) of said image content recognition uses said first annotation (204) before said second annotation (205).

4. The computer implemented method according to any one of the preceding claims, wherein said first set of images (201a) is the same as said second set of images (201b), and wherein said first and second annotations (204, 205) are present in one and the same image.

5. The computer implemented method according to any of the preceding claims, wherein said first set of images (201a) is different to said second set images (201b), and wherein said first and second annotations (204, 205) are present in different images.

6. The computer implemented method according to any one of the preceding claims, wherein said second annotation (205) comprises information about differences between pairs of images (206) of the plurality of images.

7. The computer implemented method according to claim 6, wherein the difference between a first image (206a) and a second image (206b) of the pair of images (206) comprises information of at least one object (203) added to or removed from a background (207) between the capture of the first image (206a) and the second image (206b), while the position of objects (203) not added to or not removed from the background (207) between the first image (206a) and the second image (206b) is unchanged.

8. The computer implemented method, according to any one of claims 6-7, wherein the difference between a first image (206a) and a second image (206b) of the pair of images (206) comprises information of at least one change of position of at least one object (203) on a background (207) between the capture of the first image (206a) and the second image (206b).

9. The computer implemented method according to any one of claims 1-8, wherein the first annotation (204) comprises an object mask of said at least one object (203).

10. The computer implemented method according to any one of claims 1-9, wherein said second annotation (205) comprises information of a number of objects of said at least one object (203).

11. The computer implemented method according to any one of the preceding claims, wherein provision of the first and/or second annotation comprises receiving input information via a user interface (301) and wherein the first and/or second annotation is based on the received input information.

12. The computer implemented method according to claim 11, wherein provision of the first and/or second annotation comprises operating the machine vision system (100) to capture the first set and/or second set of images, and, in association with the capturing of images of the first and/or second set, receiving said input information via the user interface.

13. The computer implemented method according to claim 12, wherein said input information is input via the user interface per captured image of the second set, and wherein said input information comprises information regarding a difference in number of objects between consecutively captured images of the second set.

14. A computer program product (1001) comprising computer program code, the computer program code being adapted, if executed by a processor (1002), to perform the method according to any one of claims 1-13.

15. A machine vision system (100) being operative to recognize at least one object (203) in captured images wherein at least one image (202) comprises the at least one object (203), the system (100) comprising an imaging unit (501) configured to capture images and a processor (1002) configured to execute the computer program product (1001) according to claim 14.
